# EUROPEAN PATENT SPECIFICATION

(11) **EP 4 459 245 B1**
(45) Date of publication and mention of the grant of the patent: **25.11.2026**
(21) Application number: 24166673.4
(22) Date of filing: 27.03.2024
(51) Int. Cl.: G01G 19/393

(54) **WEIGHING HEAD FOR A MULTI-HEAD WEIGHING MACHINE AND MULTI-HEAD WEIGHING MACHINE**
WÄGEKOPF FÜR EINE MEHRKOPFWAAGE UND MEHRKOPFWAAGE
TÊTE POUR UNE PESEUSE MULTI-TÊTES ET PESEUSE MULTI-TÊTES

(30) Priority: 02.05.2023 IT 202300008574
(43) Date of publication of application: 06.11.2024
(73) Proprietor: MBP S.r.l., 46043 Castiglione delle Stiviere (Mantova) (IT)
(72) Inventor: FIORAVANTI, Andrea, 46043 Castiglione delle Stiviere (Mantova) (IT); PAVAN, Marco, 46043 Castiglione delle Stiviere (Mantova) (IT)
(74) Representative: Locatelli, Gian Matteo

(56) References cited:
- JP-A- 2017 015 469
- US-A1- 2009 294 183

## Description

The present invention relates to a weighing head for a multi-head weighing machine and a multi-head weighing machine.

Therefore, the present invention finds a vast field of application in the sector of packaging machines for products of various kinds, and mainly of the food type.

As disclosed in US2009/294183A1, in the sector of weighing and dosing of food products or the like, automatic machines are generally used, commonly referred to as multi-head weighing machines, which are configured to weigh the product fed thereto and then convey the predetermined dose to a packaging machine.

Multi-head weighing machines comprise a plurality of weighing heads circumferentially arranged around a central body and a plurality of respective radial ducts, generally vibrators, which move the product towards the weighing heads.

The weighing heads generally comprise a pre-dosing bucket, adapted to receive product from the above-mentioned vibrators, and a weighing bucket, arranged below the pre-dosing bucket along a vertical direction and configured to receive at least a part of the product released by falling from the pre-dosing bucket.

Generally, the weighing bucket comprises a pair of opposite and movable lower rotatable flaps to allow or prohibit the product from exiting the bucket. Essentially, the bucket comprises a linkage active on both flaps to move them simultaneously mutually away from each other or mutually towards each other so as to allow or prevent the product from exiting the bucket.

Some weighing heads can comprise a memory bucket downstream of the weighing bucket which allows to increase the weighing accuracy thereof.

Furthermore, to cope with the need for ever higher weighing speeds, weighing heads have been developed in which the weighing buckets are capable of independently opening the two flaps so as to selectively release the product inside one of the two independent ways of a two-way conveyor. Disadvantageously, the independent driving of the two flaps requires the presence of two actuators independent of each other, and each of which is dedicated to driving one of the two flaps.

Therefore, the use of such weighing buckets necessitates the adoption of peculiar weighing heads specially equipped with the aforementioned actuators so that the flaps can be moved independently.

That is, the above-mentioned buckets are fundamentally incompatible with the weighing heads commonly used for buckets provided with pairs of simultaneously opening flaps.

Therefore, the use of buckets with independent double opening causes a strong limitation of the operational flexibility of the packaging line.

Furthermore, the aforementioned actuators require dedicated feeding means and cause an increase in the number of movable parts with a consequent increase in operating costs and a reduction in the operating efficiency of the weighing machine.

Disadvantageously, moreover, such weighing heads lack the memory bucket, as the product inside the weighing head is released directly inside the two-way conveyor.

Therefore, the effectiveness of such weighing heads is substantially limited by the lack of the additional plurality of weighing combinations that the memory bucket ensures for the weighing heads with which it is associated. In this context, the technical task underpinning the present invention is to provide a weighing head for a multi-head weighing machine and a multi-head weighing machine which obviate the drawbacks in the prior art as described above.

In particular, it is an object of the present invention to provide a weighing head for a multi-head weighing machine and a multi-head weighing machine which are more efficient with respect to the devices of the prior art.

A further object of the present invention is to provide a weighing head for a multi-head weighing machine and a multi-head weighing machine having an increased operational flexibility.

The specified technical task and the specified objects are substantially achieved by a weighing head for a multi-head weighing machine and a multi-head weighing machine comprising the technical features set forth in one or more of the appended claims.

The dependent claims correspond to possible embodiments of the invention.

Further features and advantages of the present invention will become more apparent from the following approximate, and hence non-limiting, description of a preferred, but not exclusive, embodiment of a weighing head for a multi-head weighing machine and a multi-head weighing machine, as illustrated in the appended drawings, in which:

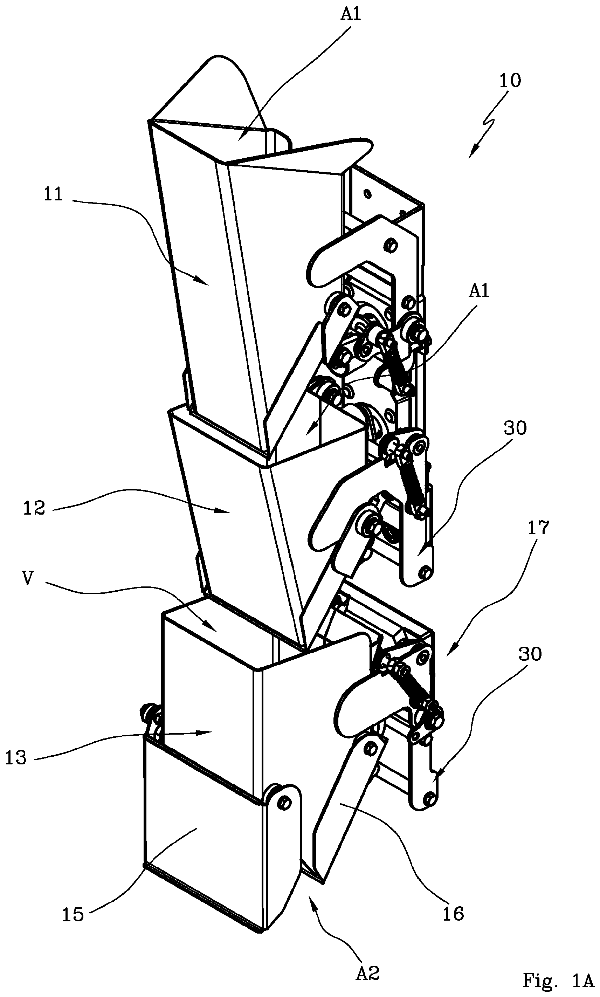

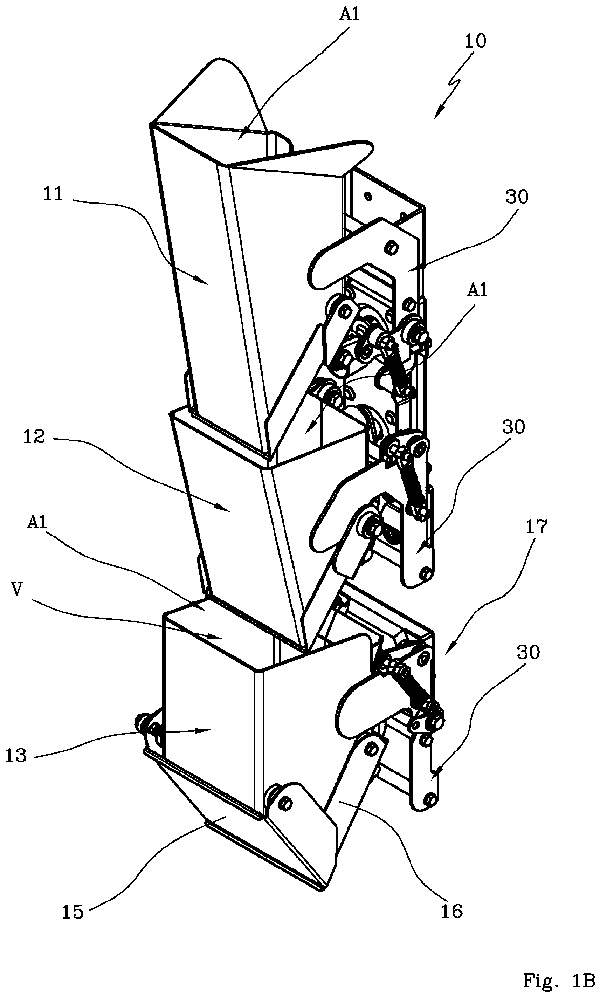

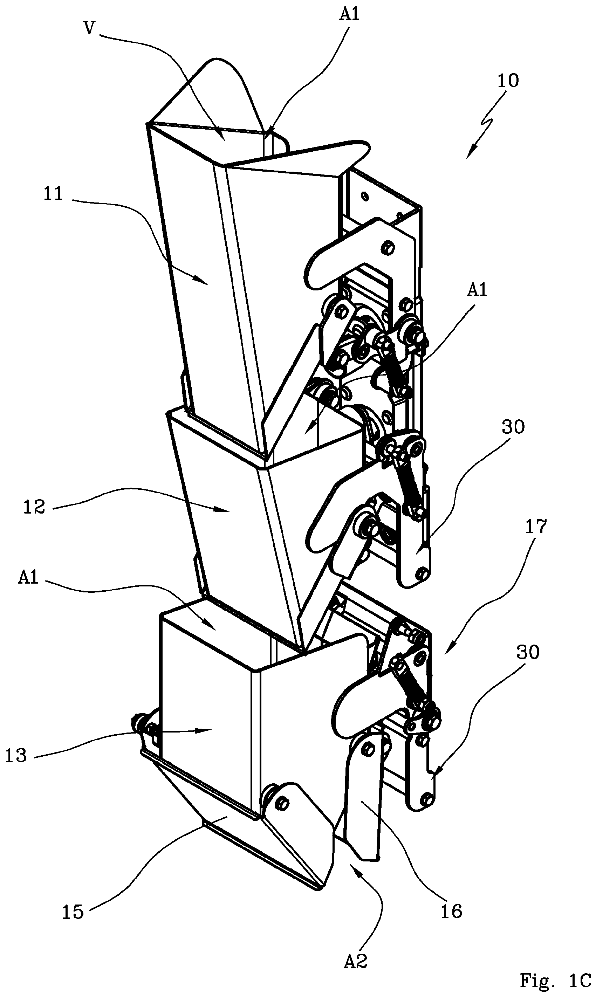

- figures 1A-1C are perspective representations of a weighing head for a multi-head weighing machine according to respective operating configurations in accordance with a possible embodiment of the present invention;

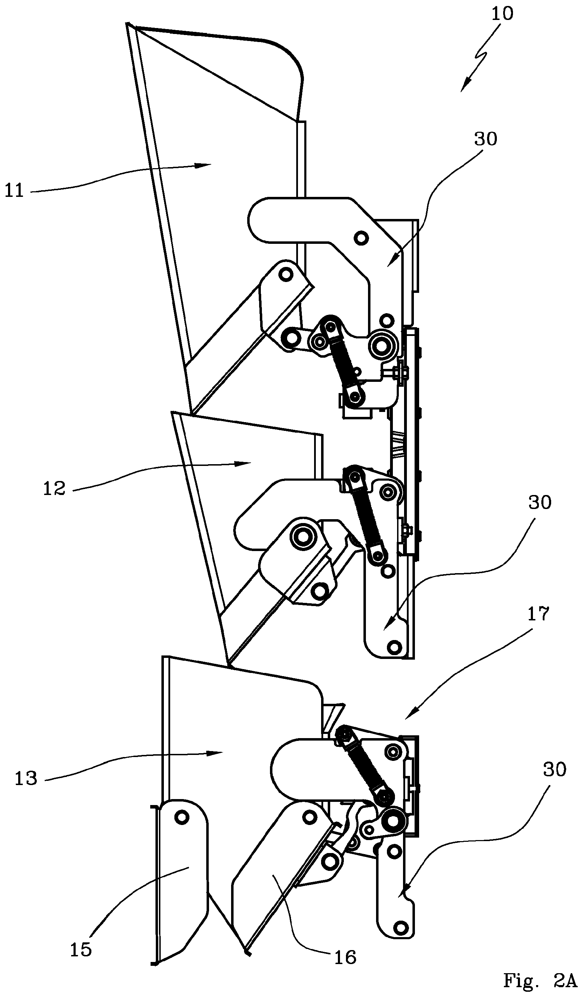

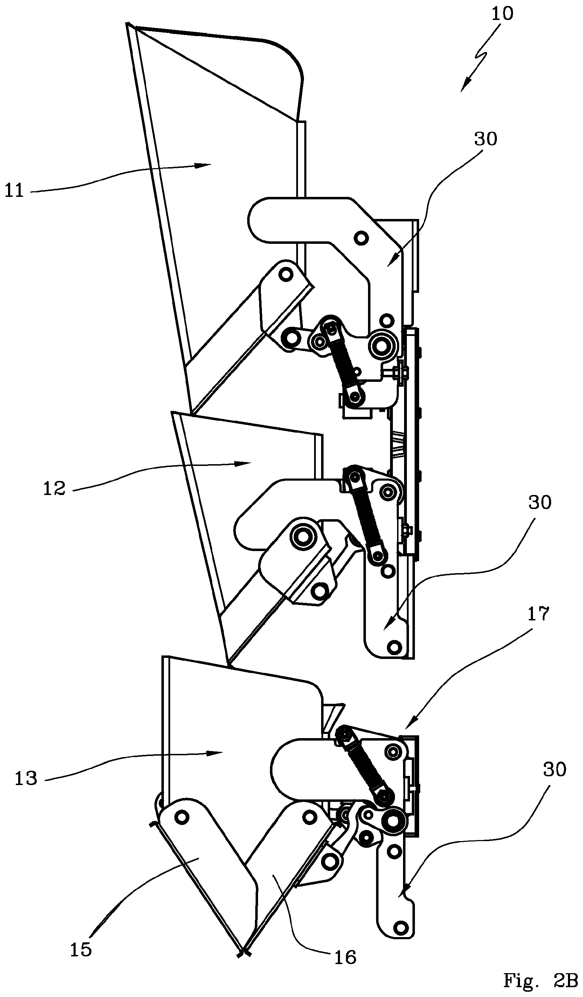

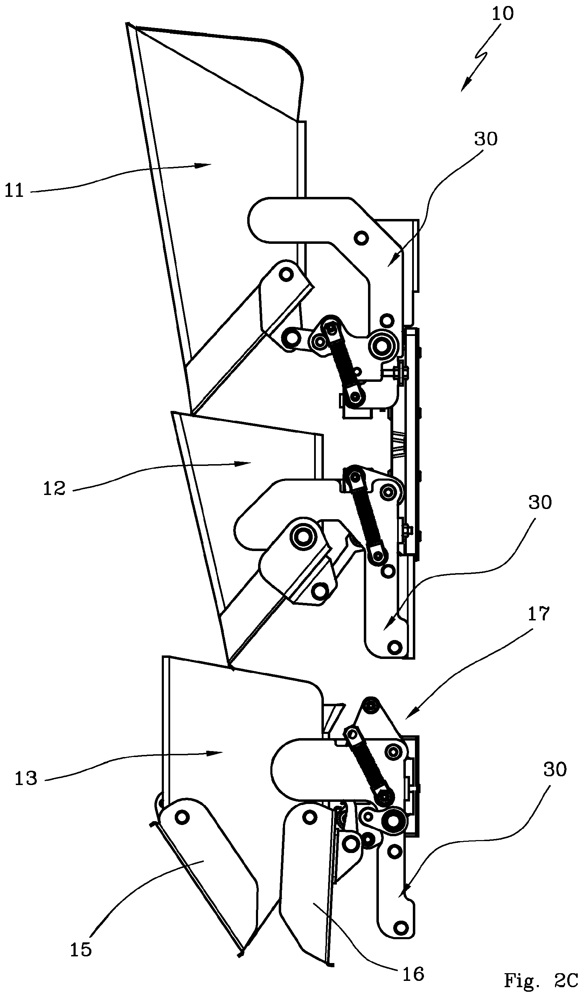

- figures 2A-2C are side views according to respective operating configurations of the weighing head for a multi-head weighing machine of figures 1A-1C.
- figures 3A-3C are perspective views according to respective operating configurations of a portion of the weighing head for a multi-head weighing machine of figures 1A-1C, 2A-2C;

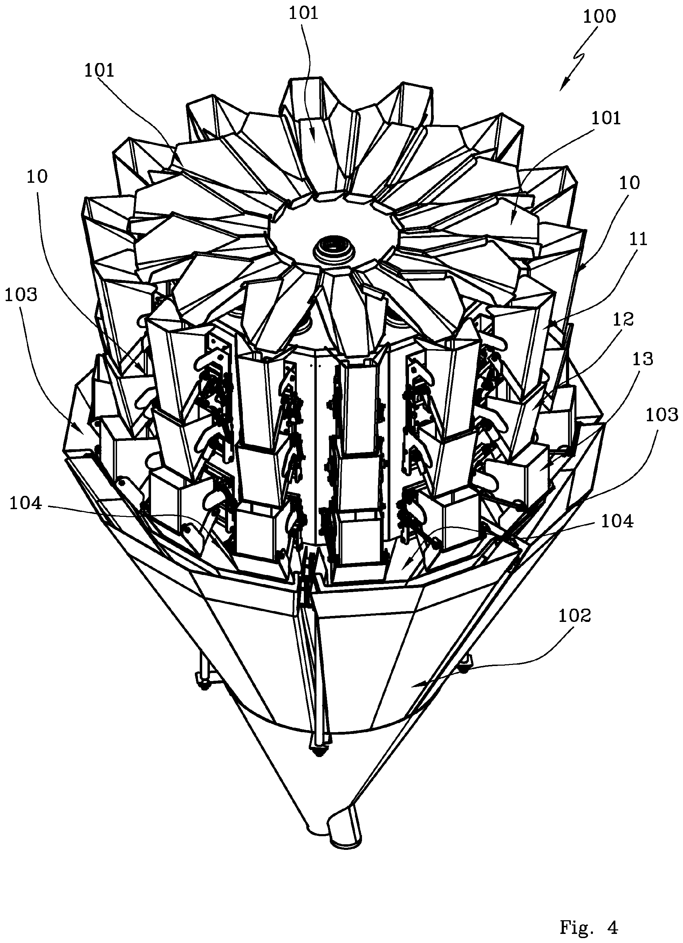

- figure 4 is a perspective representation of a multi-head weighing machine in accordance with respective possible embodiments of the present invention;

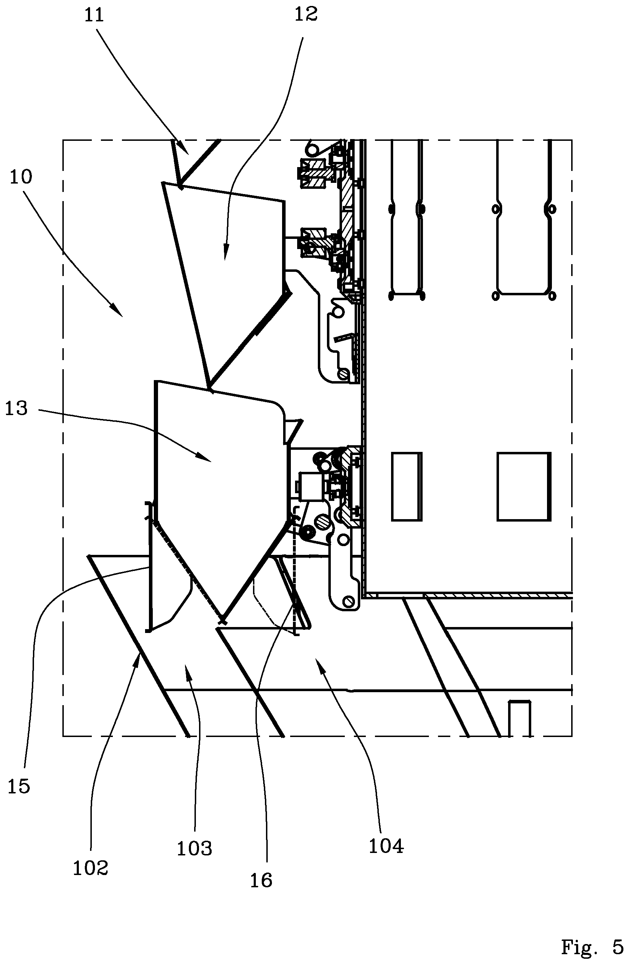

- figure 5 is a schematic sectional representation in accordance with some possible operating configurations of a portion of the multi-head weighing machine of figure 4.

With reference to the attached figures, the reference numeral 10 overall indicates a weighing head for a multi-head weighing machine, referred to in the following as weighing head 10.

The weighing head 10 comprises a pre-dosing bucket 11, adapted to receive at least one product from feeding means for feeding at least one product of a multi-head weighing machine, and a weighing bucket 12, arranged below the pre-dosing bucket 11 along a vertical direction and configured to receive at least one part of the at least one product from the pre-dosing bucket 11.

Furthermore, the weighing head 10 comprises a memory bucket 13 arranged below the weighing bucket 12 along the aforesaid vertical direction and configured to receive at least one part of the at least one product from the weighing bucket 12.

Preferably, each of the aforesaid buckets can comprise connecting means 30 adapted to reversibly connect the bucket to the weighing head 10.

In accordance with a possible embodiment and as illustrated in the attached figures, each bucket of the aforesaid pre-dosing bucket 11, weighing bucket 12 and memory bucket 13 can comprise a containment body 14 defining a containment volume "V" for containing at least one product and having an upper opening "A1" and a lower opening "A2" respectively adapted to allow an entry and an exit of the product from the containment volume "V".

Advantageously, the pre-dosing bucket 11, the weighing bucket 12 and the memory bucket 13 can be mutually arranged to define a vertical succession of buckets, thus minimising the transverse footprint of the weighing head 10.

According to the invention, the weighing bucket 12 is aligned with the memory bucket 13 along the aforesaid vertical direction. In particular, the lower opening "A2" of the weighing bucket 12 can be facing an upper opening "A1" of the memory bucket 13 to release the at least one part of the at least one product only inside the memory bucket 13.

That is, the weighing bucket 12 is specially arranged so as to release the product only inside the memory bucket 13 so that the task of releasing the product inside any conveyor or pair of concentric conveyors arranged downstream of the weighing head 10 is delegated solely to the memory bucket.

Thereby, the present invention allows to increase the efficiency of the weighing process, as will be described in more detail below.

**In** accordance with a possible embodiment of the present invention and as illustrated in the attached figures, the pre-dosing bucket 11 and/or the weighing bucket 12 can comprise a single bottom reversibly movable between a common closing configuration, in which it occludes the lower opening "A2" of the respective bucket, and an opening configuration, in which it allows the passage of at least one product from the bottom opening "A2" of the respective bucket.

According to further possible embodiments of the present invention not illustrated in the attached figures, the weighing bucket 12 can comprise a pair of flaps jointly movable between a common closing configuration, in which they occlude the lower opening "A2" of the weighing bucket 12, and a common opening configuration, in which they allow the passage of at least one product from the lower opening "A2" of the weighing bucket 12.

Advantageously, the memory bucket 13 comprises a first flap 15 and a second flap 16 which are mutually independently movable between a respective closing configuration, in which they at least partially occlude the lower opening "A2" of the memory bucket 13, and a respective opening configuration, in which they allow the passage of at least one product from the lower opening "A2" of the memory bucket 13.

For example, the first flap 15 and the second flap 16 can be rotatably connected to the containment body 14 and reversibly movable between the closing configuration and the opening configuration.

Preferably, the memory bucket 13 can comprise driving means 17 activatable on the first flap 15 and on the second flap 16. **In** particular, the driving means 17 can be configured to move the first flap 15 and/or the second flap 16 between the closing configuration and the opening configuration.

Advantageously, the driving means 17 can comprise a first linkage 18 and a second linkage 19 connected respectively to the first flap 15 and to the second flap 16 to move them between the closing configuration and the opening configuration in a mutually independent manner.

Thereby, the first linkage 18 and the second linkage 19 ensure an independent movement of the first flap 15 and the second flap 16 between respective opening and closing configurations, allowing, for example, the product to be released in different release stations as a function of one or more operational requirements.

Purely by way of non-limiting example, the aforesaid first linkage 18 and second linkage 19 can allow a selective and independent movement of the first flap 15 and the second flap 16 so as to perform a selective release of the product inside a conveyor of a pair of concentric conveyors.

Furthermore, the weighing head 10 can comprise an actuating means 20 activatable on the driving means 17 for performing a movement of the first flap 15 and/or the second flap 16.

**In** particular, the actuating means 20 can comprise an actuating element 21 reversibly movable between at least one actuating position, in which it is active on the driving means 17 for performing a movement of the first flap 15 and/or of the second flap 16, and at least one resting position, in which it is not active on the driving means 17.

Advantageously, the driving means 17 can comprise a first abutment portion 22 and a second abutment portion 23 operatively connected to the first linkage 18 and the second linkage 19, respectively.

In particular, the first abutment portion 22 and the second abutment portion 23 can be selectively activatable by the actuating element 21 of the weighing head 10 for driving the first linkage 18 and/or the second linkage 19.

It should be noted that the actuating element can be defined by the actuating element commonly used for opening buckets provided with two simultaneously opening flaps and/or buckets provided with a single movable flap defining the bottom of the bucket.

For example, the actuating element 21 can have the same conformation as the actuating elements used to open and close the pre-dosing bucket 11 and the weighing bucket 12.

Thereby, the present invention overcomes the need for making weighing heads provided with special actuating means to allow the independent movement of the first flap 15 and the second flap 16, thus ensuring a high degree of operational flexibility.

**In** fact, the first abutment portion 22 and the second abutment portion 23 can be actuated by means of the same actuating element used for opening buckets provided with two simultaneously opening flaps and/or buckets provided with a single movable flap defining the bottom of the bucket.

Thereby, the first abutment portion 22 and the second abutment portion 23 give the memory basket 13 a marked operational flexibility which allows it to be used interchangeably with the aforesaid buckets of different types as a function of the peculiar operational requirements, for example as a function of the need to use a single conveyor or a pair of concentric conveyors downstream of the weighing head.

Furthermore, the use of a single actuator for the first abutment portion 22 and the second abutment portion 23 allows to reduce the movable parts used, reflected in an increase in the efficiency of the weighing head and in a reduction of the vibrations induced on the entire machine.

Purely by way of non-limiting example, the first abutment portion 22 and the second abutment portion 23 can be selectively operated through geometric interference with the actuating element 21.

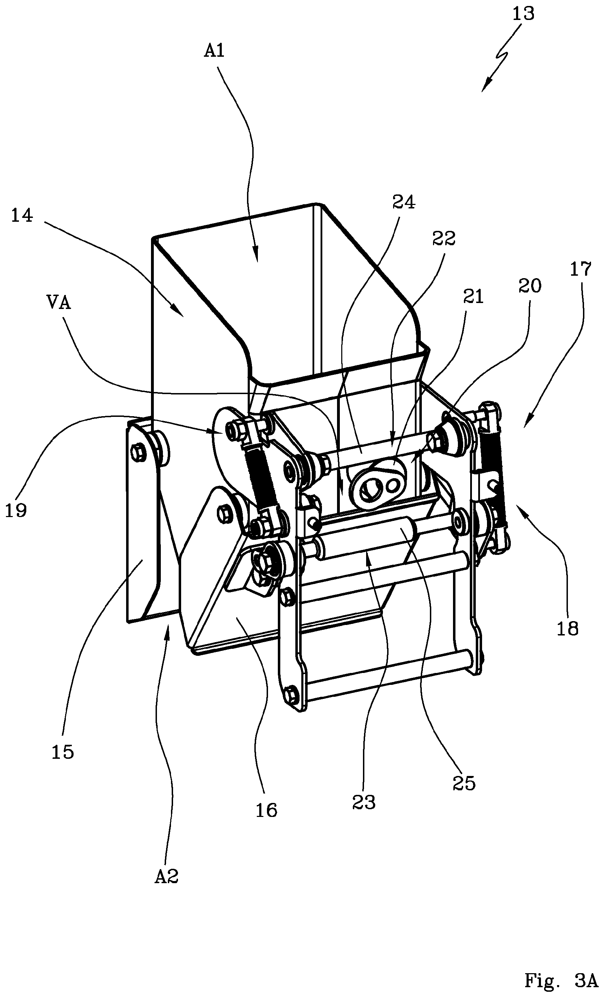

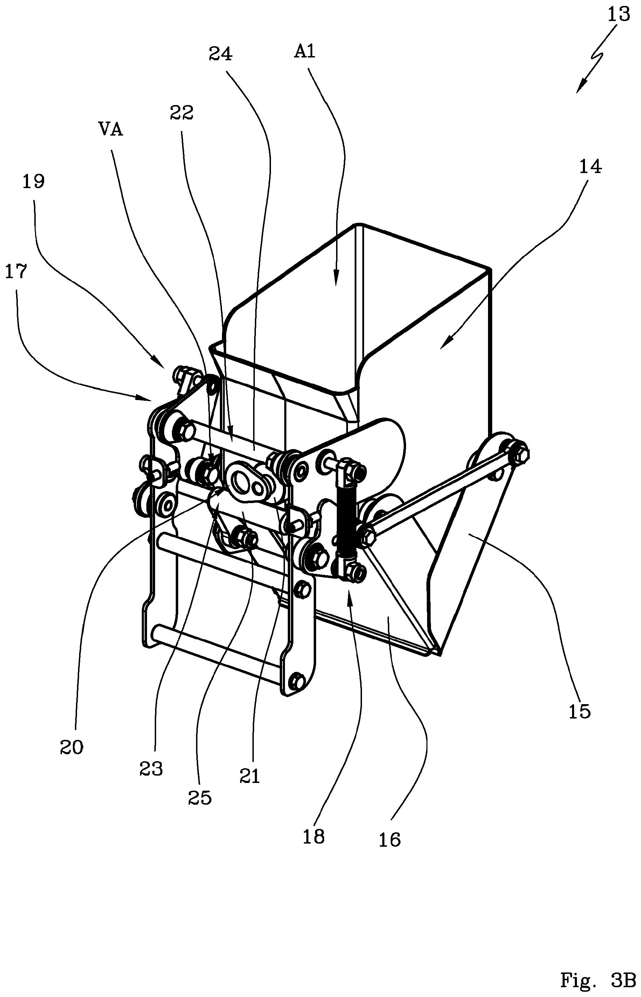

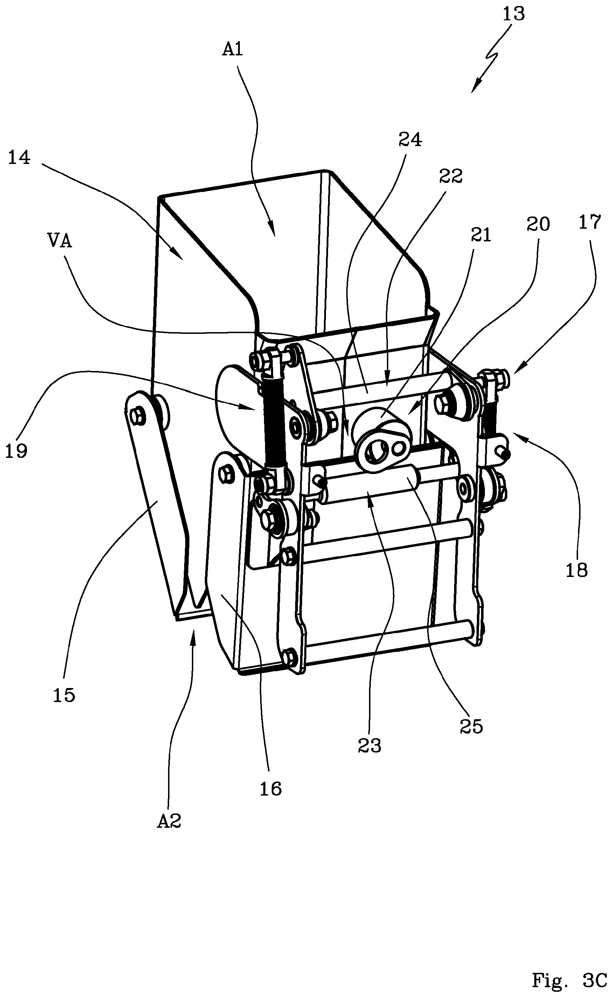

Preferably, the first abutment portion 22 and the second abutment portion 23 define a driving volume "VA" therebetween which is adapted to at least partially receive the actuating element 21 in insertion so that the actuating element 21 is reversibly movable between at least one actuating position (as illustrated in figures 3A, 3C), in which it is active on the first linkage 18 and/or on the second linkage 19 to perform a movement of the first flap 15 and/or of the second flap 16, and at least one resting position (as illustrated in figure 3B), in which it is not active on the driving means 17.

In accordance with a possible embodiment and as illustrated in the attached figures, the first abutment portion 22 and the second abutment portion 23 are facing each other, facilitating the driving of the first linkage 18 and the second linkage 19 by the aforementioned driving means 20.

Purely by way of non-limiting example, the driving means 17 can comprise a first driving bar 24 and a second driving bar 25 at least partially defining the first abutment portion 22 and the second abutment portion 23, respectively.

In particular, the first driving bar 24 and the second driving bar 25 can have respective extension directions which are substantially parallel to each other.

Preferably, the first driving bar 24 and/or the second driving bar 25 and/or the first abutment portion 22 and/or the second abutment portion 23 can have substantially horizontal extension directions.

Furthermore, the first abutment portion 22 can be arranged in a position proximal to the upper opening "A1" of the memory bucket 13 and the second abutment portion 23 can be arranged in a position proximal to the lower opening "A2" of the memory bucket 13.

For example, the first abutment portion 22 can be arranged above the second abutment portion 23 along the aforesaid vertical direction at least during a use condition of the weighing head 10.

Thereby, the memory bucket 13 has a marked ease in driving the first linkage 18 and/or the second linkage 19, allowing, for example, a driving by means of a limited movement of the actuating element 21 between the aforesaid actuating and resting positions.

Preferably, the actuating element 21 can be at least partially interposed between the first abutment portion 22 and the second abutment portion 23 during a use configuration.

In accordance with a possible embodiment purely given by way of non-limiting example, the actuating element 21 is reversibly movable between a first actuating position (as illustrated in figure 3A), in which it is active on the first abutment portion 22 to perform a movement of the first flap 15, and a second actuating position (as illustrated in figure 3C), in which it is active on the second abutment portion 23 to perform a movement of the second flap 16.

For example, the actuating element 21 can be reversibly movable between the first actuating position, in which it is abutting on the first abutment portion 22 to perform a movement of the first flap 15, and a second actuating position, in which it is abutting on the second abutment portion 23 to perform a movement of the second flap 16.

In accordance with a possible embodiment of the present invention, the resting position can be at least partially interposed between the first actuating position and the second actuating position (as illustrated in figure 3B).

In particular, the actuating means 20 can be configured to move the actuating element 21 along a substantially circular path.

Preferably, the actuating means 20 can be configured to move the actuating element 21 in a substantially vertical plane.

For example, the actuating means 20 can be configured to move the actuating element 21 between a raised position, for example corresponding to the first actuating position, and a lowered position, for example corresponding to the second actuating position.

Purely by way of non-limiting example, the actuating means 20 can comprise a stepper motor active on the actuating element 21 for reversibly moving it between the at least one actuating position and the at least one resting position.

In accordance with a further aspect, the present invention relates to a multi-head weighing machine 100 comprising a plurality of weighing heads. In particular, the at least one weighing head is a weighing head 10 in accordance with what has been described above.

Furthermore, the multi-head weighing machine 100 can comprise feeding means 101 for feeding at least one product, adapted to feed at least one product to at least one weighing head of the aforesaid plurality of weighing heads, and at least one conveyor 102 adapted to receive the product from at least one weighing head and convey it towards a packaging machine.

Preferably, the multi-head weighing machine 100 can comprise a first conveyor 103 and a second conveyor 104 arranged at least partially below the memory bucket 13 to receive at least one product from the memory bucket 13.

In particular, the first conveyor 103 and the second conveyor 104 can be at least partially concentric.

Furthermore, the first flap 15 and the second flap 16 can be selectively movable between the respective closing configuration and opening configuration to selectively release at least one product in the first conveyor 103 or the second conveyor 104.

According to the invention, the weighing bucket 12 is vertically aligned and substantially facing the memory bucket 13 so that the product of the weighing bucket 12 is only released inside the memory bucket 13 and that the selective release function of the product inside the first conveyor 103 or the second conveyor 104 is delegated only to the memory bucket 13.

Thereby, the arrangement of the buckets allows to increase the number of weighing combinations available to the multi-head weighing machine 100, ensuring an increase in the weighing accuracy and precision.

It is therefore observed that the present invention achieves the proposed objects by providing a weighing head and a multi-head weighing machine having an increased efficiency with respect to the devices of the prior art thanks to the presence of a memory bucket comprising a first flap and a second flap mutually independently movable between a respective closing configuration and a respective opening configuration to selectively release at least one product inside a first conveyor and/or a second conveyor.

Advantageously, the present invention allows to overcome the need for weighing heads specially made for the use of buckets provided with independently opening flaps thanks to the creation of driving means activatable by means of standardised actuating elements commonly used in weighing heads for buckets with simultaneously opening flaps or with a single flap.

## Claims

1. A weighing head (10) for a multi-head weighing machine comprising:
- a pre-dosing bucket (11) adapted to receive at least one product from feeding means for feeding at least one product of a multi-head weighing machine;
- a weighing bucket (12) arranged below said pre-dosing bucket (11) along a vertical direction and configured to receive at least one part of the at least one product from said pre-dosing bucket (11);
- a memory bucket (13) arranged below said weighing bucket (12) along a vertical direction and configured to receive at least one part of the at least one product from said weighing bucket (12);
said memory bucket (13) comprises a first flap (15) and a second flap (16) which are mutually independently movable between a respective closing configuration, in which they at least partially occlude a lower opening of said memory bucket (13), and a respective opening configuration, in which they allow the passage of at least one product from said lower opening of said memory bucket (13);
**characterised in that** said weighing bucket (12) is aligned with said memory bucket (13) along said vertical direction; and wherein a lower opening of said weighing bucket (12) faces an upper opening of said memory bucket (13) to release the at least one part of the at least one product only inside said memory bucket (13); and
wherein said weighing bucket (12) is arranged so as to release the product only inside a memory bucket (13) so that the task of releasing the product inside a possible conveyor or pair of concentric conveyors arranged downstream of the weighing head (10) is delegated solely to the memory bucket (13).

2. The weighing head according to claim 1, wherein said memory bucket (13) comprises driving means (17) activatable on said first flap (15) and said second flap (16) and configured to move said first flap (15) and/or said second flap (16) between said closing configuration and said opening configuration, said driving means (17) comprising a first linkage (18) and a second linkage (19) that are connected respectively to said first flap (15) and to said second flap (16) to move them between said closing configuration and said opening configuration in a mutually independent manner.

3. The weighing head according to claim 2, comprising an actuating means (20) activatable on said driving means (17) for performing a movement of said first flap (15) and/or of said second flap (16) and comprising an actuating element (21) reversibly movable between at least one actuating position, in which it is active on said driving means (17) for performing a movement of said first flap (15) and/or of said second flap (16), and at least one resting position, in which it is not active on said driving means (17).

4. The weighing head according to claim 3, wherein said actuating means (20) is configured to move said actuating element (21) along a substantially circular path; and/or wherein said actuating means (20) is configured to move said actuating element (21) in a substantially vertical plane.

5. The weighing head according to claim 3 or 4, wherein said driving means (17) comprises a first abutment portion (22) and a second abutment portion (23) that are operatively connected respectively to said first linkage (18) and to said second linkage (19), said first abutment portion (22) and said second abutment portion (23) being selectively activatable by an actuating element (21) of the weighing head for driving said first linkage (18) and/or said second linkage (19).

6. The weighing head according to claim 5, wherein said first abutment portion (22) and said second abutment portion (23) define a driving volume (VA) therebetween which is adapted to at least partially receive the actuating element (21) in insertion so that the actuating element (21) is reversibly movable between at least one actuating position, in which it is active on said first linkage (18) and/or on said second linkage (19) to perform a movement of said first flap (15) and/or of said second flap (16), and at least one resting position, in which it is not active on said driving means (17).

7. The weighing head according to claim 6, wherein said actuating element (21) is reversibly movable between a first actuating position, in which it is active on said first abutment portion (22) to perform a movement of said first flap (15), and a second actuating position, in which it is active on said second abutment portion (23) to perform a movement of said second flap (16); and wherein said resting position is at least partially interposed between said first actuating position and said second actuating position.

8. The weighing head according to claim 7, wherein said actuating means (20) is configured to move said actuating element (21) between a raised position, for example corresponding to the first actuating position, and a lowered position, for example corresponding to said second actuating position.

9. The weighing head according to one or more of claims 5-8, wherein said first abutment portion (22) and said second abutment portion (23) are facing each other.

10. The weighing head according to one or more of claims 5-9, wherein said driving means (17) comprises a first driving bar (24) and a second driving bar (25) at least partially defining the first abutment portion (22) and the second abutment portion (23), respectively.

11. The weighing head according to claim 10, wherein said first driving bar (24) and said second driving bar (25) have respective substantially parallel extension directions to each other; and/or wherein said first driving bar (24) and/or said second driving bar (25) and/or said first abutment portion (22) and/or said second abutment portion (23) have substantially horizontal extension directions.

12. The weighing head according to one or more of the preceding claims, wherein the weighing bucket (12) comprises a pair of flaps jointly movable between a common closing configuration, in which they occlude a lower opening of said weighing bucket (12), and a common opening configuration, in which they allow the passage of at least one product from said lower opening of said weighing bucket (12).

13. A multi-head weighing machine (100) comprising:
- a plurality of weighing heads, wherein at least one weighing head is a weighing head (10) according to one or more of the preceding claims;
- feeding means (101) for feeding at least one product adapted to feed at least one product to at least one weighing head of said plurality of weighing heads;
- at least one conveyor (102) adapted to receive the product from at least one weighing head and convey it towards a packaging machine.

14. The multi-head weighing machine according to claim 13, comprising a first conveyor (103) and a second conveyor (104) that are arranged at least partially below said memory bucket (13) to receive at least one product from said memory bucket (13); and wherein said first flap (15) and said second flap (16) are selectively movable between the respective closing configuration and opening configuration to release the at least one product in said first conveyor (103) and/or in said second conveyor (104).

## Patentansprüche

1. Ein Wiegekopf (10) für eine Mehrkopfwaage, umfassend:
- einen Vordosierbehälter (11), der dazu ausgelegt ist, mindestens ein Produkt von einer Zuführeinrichtung zur Zuführung mindestens eines Produkts einer Mehrkopfwaage aufzunehmen;
- einen Wiegebehälter (12), der entlang einer vertikalen Richtung unterhalb des Vordosierbehälters (11) angeordnet und so ausgebildet ist, dass er mindestens einen Teil des mindestens einen Produkts aus dem Vordosierbehälter (11) aufnimmt;
- einen Speicherbehälter (13), der entlang einer vertikalen Richtung unterhalb des Wiegebehälters (12) angeordnet und so ausgebildet ist, dass er mindestens einen Teil des mindestens einen Produkts aus dem Wiegebehälter (12) aufnimmt;
wobei der Speicherbehälter (13) eine erste Klappe (15) und eine zweite Klappe (16) umfasst, die unabhängig voneinander zwischen einer jeweiligen Schließstellung, in der sie eine untere Öffnung des Speicherbehälters (13) zumindest teilweise verschließen, und einer jeweiligen Öffnungsstellung, in der sie den Durchgang mindestens eines Produkts durch die untere Öffnung des Speicherbehälters (13) ermöglichen, bewegbar sind;
**dadurch gekennzeichnet, dass** der Wiegebehälter (12) entlang der vertikalen Richtung auf den Speicherbehälter (13) ausgerichtet ist; und wobei eine untere Öffnung des Wiegebehälters (12) einer oberen Öffnung des Speicherbehälters (13) zugewandt ist, um den mindestens einen Teil des mindestens einen Produkts ausschließlich in den Speicherbehälter (13) freizugeben;
und wobei der Wiegebehälter (12) so angeordnet ist, dass er das Produkt ausschließlich in einen Speicherbehälter (13) abgibt, sodass die Aufgabe der Produktabgabe in einen möglichen Förderer oder ein Paar konzentrischer Förderer, die stromabwärts des Wiegekopfes (10) angeordnet sind, ausschließlich dem Speicherbehälter (13) übertragen wird.

2. Wiegekopf nach Anspruch 1, wobei der Speicherbehälter (13) Antriebsmittel (17) umfasst, die an der ersten Klappe (15) und der zweiten Klappe (16) betätigbar sind und so ausgelegt sind, dass sie die erste Klappe (15) und/oder die zweite Klappe (16) zwischen der Schließstellung und der Öffnungsstellung zu bewegen, wobei die Antriebsmittel (17) ein erstes Gestänge (18) und ein zweites Gestänge (19) umfassen, die jeweils mit der ersten Klappe (15) und der zweiten Klappe (16) verbunden sind, um diese unabhängig voneinander zwischen der Schließstellung und der Öffnungsstellung zu bewegen.

3. Der Wiegekopf nach Anspruch 2, umfassend eine Betätigungseinrichtung (20), die an der Antriebseinrichtung (17) aktivierbar ist, um eine Bewegung der ersten Klappe (15) und/oder der zweiten Klappe (16) auszuführen, und mit einem Betätigungselement (21), das reversibel zwischen mindestens einer Betätigungsposition, in der es auf die Antriebseinrichtung (17) einwirkt, um eine Bewegung der ersten Klappe (15) und/oder der zweiten Klappe (16) auszuführen, und mindestens einer Ruhestellung, in der es nicht auf die Antriebseinrichtung (17) einwirkt, bewegbar ist.

4. Wiegekopf nach Anspruch 3, wobei die Betätigungseinrichtung (20) so ausgebildet ist, dass sie das Betätigungselement (21) entlang einer, im Wesentlichen kreisförmigen Bahn bewegt; und/oder wobei die Betätigungseinrichtung (20) so ausgebildet ist, dass sie das Betätigungselement (21) in einer, im Wesentlichen vertikalen Ebene bewegt.

5. Der Wiegekopf nach Anspruch 3 oder 4, wobei die Antriebseinrichtung (17) einen ersten Anschlagabschnitt (22) und einen zweiten Anschlagabschnitt (23) umfasst, die jeweils mit dem ersten Gestänge (18) und dem zweiten Gestänge (19) funktionsmäßig verbunden sind, wobei der erste Anschlagabschnitt (22) und der zweite Anschlagabschnitt (23) durch ein Betätigungselement (21) des Wiegekopfes selektiv aktivierbar sind, um das erste Gestänge (18) und/oder das zweite Gestänge (19) anzutreiben.

6. Wiegekopf nach Anspruch 5, wobei der erste Anschlagabschnitt (22) und der zweite Anschlagabschnitt (23) zwischen sich ein Antriebsvolumen (VA) bilden, das so ausgelegt ist, dass es das Betätigungselement (21) beim Einführen zumindest teilweise aufnimmt, sodass das Betätigungselement (21) reversibel zwischen mindestens einer Betätigungsposition, in der es auf das erste Gestänge (18) und/oder das zweite Gestänge (19) einwirkt, um eine Bewegung der ersten Klappe (15) und/oder der zweiten Klappe (16) auszuführen, und mindestens einer Ruhestellung bewegbar ist, in der es nicht auf die Antriebseinrichtung (17) einwirkt.

7. Wiegekopf nach Anspruch 6, wobei das Betätigungselement (21) reversibel zwischen einer ersten Betätigungsposition, in der es auf den ersten Anschlagabschnitt (22) einwirkt, um eine Bewegung der ersten Klappe (15) auszuführen, und einer zweiten Betätigungsposition, in der es auf den zweiten Anschlagabschnitt (23) einwirkt, um eine Bewegung der zweiten Klappe (16) auszulösen; und wobei die Ruheposition zumindest teilweise zwischen der ersten Betätigungsposition und der zweiten Betätigungsposition liegt.

8. Wiegekopf nach Anspruch 7, wobei die Betätigungseinrichtung (20) so ausgebildet ist, dass sie das Betätigungselement (21) zwischen einer angehobenen Position, die beispielsweise der ersten Betätigungsposition entspricht, und einer abgesenkten Position, die beispielsweise der zweiten Betätigungsposition entspricht, bewegt.

9. Wiegekopf nach einem oder mehreren der Ansprüche 5-8, wobei der erste Anschlagabschnitt (22) und der zweite Anschlagabschnitt (23) einander gegenüberliegen.

10. Der Wiegekopf nach einem oder mehreren der Ansprüche 5-9, wobei die Antriebseinrichtung (17) eine erste Antriebsstange (24) und eine zweite Antriebsstange (25) umfasst, die zumindest teilweise den ersten Anschlagabschnitt (22) bzw. den zweiten Anschlagabschnitt (23) definieren.

11. Der Wiegekopf nach Anspruch 10, wobei die erste Antriebsstange (24) und die zweite Antriebsstange (25) im Wesentlichen zueinander parallele Ausdehnungsrichtungen aufweisen; und/oder wobei die erste Antriebsstange (24) und/oder die zweite Antriebsstange (25) und/oder der erste Anschlagabschnitt (22) und/oder der zweite Anschlagabschnitt (23) im Wesentlichen horizontale Ausdehnungsrichtungen aufweisen.

12. Wiegekopf nach einem oder mehreren der vorstehenden Ansprüche, wobei der Wiegebehälter (12) ein Paar Klappen umfasst, die gemeinsam zwischen einer gemeinsamen Schließstellung, in der sie eine untere Öffnung des Wiegebehälters (12) verschließen, und einer gemeinsamen Öffnungsstellung, in der sie den Durchgang mindestens eines Produkts durch die untere Öffnung des Wiegebehälters (12) ermöglichen, bewegbar sind.

13. Mehrkopfwaage (100), umfassend:
- eine Vielzahl von Wiegeköpfen, wobei mindestens ein Wiegekopf ein Wiegekopf (10) gemäß einem oder mehreren der vorstehenden Ansprüche ist;
- Zuführmittel (101) zum Zuführen mindestens eines Produkts, die dazu ausgelegt sind, mindestens ein Produkt zu mindestens einem Wiegekopf der Vielzahl von Wiegeköpfen zuzuführen.
- mindestens ein Förderband (102), das dazu ausgelegt ist, das Produkt von mindestens einem Wiegekopf aufzunehmen und es zu einer Verpackungsmaschine zu befördern.

14. Mehrkopfwaage nach Anspruch 13, umfassend ein erstes Förderband (103) und ein zweites Förderband (104), die zumindest teilweise unterhalb des Vorratsbehälters (13) angeordnet sind, um mindestens ein Produkt aus dem Vorratsbehälter (13) aufzunehmen; und wobei die erste Klappe (15) und die zweite Klappe (16) wahlweise zwischen der jeweiligen Schließstellung und der Öffnungsstellung bewegbar sind, um das mindestens eine Produkt in den ersten Förderer (103) und/oder in den zweiten Förderer (104) freizugeben.

## Revendications

1. Tête de pesage (10) pour une peseuse associative comprenant :
- une benne de prédosage (11) adaptée pour recevoir au moins un produit à partir de moyens d'alimentation pour alimenter au moins un produit d'une peseuse associative ;
- une benne de pesage (12) disposée en dessous de ladite benne de prédosage (11) le long d'une direction verticale et configurée pour recevoir au moins une partie de l'au moins un produit provenant de ladite benne de prédosage (11) ;
- une benne de mémoire (13) disposée en dessous de ladite benne de pesage (12) le long d'une direction verticale et configurée pour recevoir au moins une partie de l'au moins un produit provenant de ladite benne de pesage (12) ;
ladite benne de mémoire (13) comprend un premier volet (15) et un second volet (16) qui sont mobiles de manière mutuellement indépendante entre une configuration de fermeture respective, dans laquelle ils occluent au moins partiellement une ouverture inférieure de ladite benne de mémoire (13), et une configuration d'ouverture respective, dans laquelle ils permettent le passage d'au moins un produit depuis ladite ouverture inférieure de ladite benne de mémoire (13) ;
**caractérisée en ce que** ladite benne de pesage (12) est alignée avec ladite benne de mémoire (13) le long de ladite direction verticale ; et dans laquelle une ouverture inférieure de ladite benne de pesage (12) fait face à une ouverture supérieure de ladite benne de mémoire (13) pour relâcher la au moins une partie de l'au moins un produit uniquement à l'intérieur de ladite benne de mémoire (13) ; et
dans laquelle ladite benne de pesage (12) est agencée de manière à relâcher le produit uniquement à l'intérieur d'une benne de mémoire (13) de sorte que la tâche de relâcher le produit à l'intérieur d'un éventuel convoyeur ou d'une paire de convoyeurs concentriques agencés en aval de la tête de pesage (10) est déléguée exclusivement à la benne de mémoire (13).

2. Tête de pesage selon la revendication 1, dans laquelle ladite benne de mémoire (13) comprend des moyens d'entraînement (17) activables sur ledit premier volet (15) et ledit second volet (16) et configurés pour déplacer ledit premier volet (15) et/ou ledit second volet (16) entre ladite configuration de fermeture et ladite configuration d'ouverture, lesdits moyens d'entraînement (17) comprenant une première tringlerie (18) et une seconde tringlerie (19) qui sont reliées respectivement audit premier volet (15) et audit second volet (16) pour les déplacer entre ladite configuration de fermeture et ladite configuration d'ouverture de manière mutuellement indépendante.

3. Tête de pesage selon la revendication 2, comprenant un moyen d'actionnement (20) activable sur lesdits moyens d'entraînement (17) pour effectuer un mouvement dudit premier volet (15) et/ou dudit second volet (16) et comprenant un élément d'actionnement (21) mobile de manière réversible entre au moins une position d'actionnement, dans laquelle il est actif sur lesdits moyens d'entraînement (17) pour effectuer un mouvement dudit premier volet (15) et/ou dudit second volet (16), et au moins une position de repos, dans laquelle il n'est pas actif sur lesdits moyens d'entraînement (17).

4. Tête de pesage selon la revendication 3, dans laquelle ledit moyen d'actionnement (20) est configuré pour déplacer ledit élément d'actionnement (21) le long d'une trajectoire sensiblement circulaire ; et/ou dans laquelle ledit moyen d'actionnement (20) est configuré pour déplacer ledit élément d'actionnement (21) dans un plan sensiblement vertical.

5. Tête de pesage selon la revendication 3 ou 4, dans laquelle lesdits moyens d'entraînement (17) comprennent une première partie de butée (22) et une seconde partie de butée (23) qui sont reliées fonctionnellement respectivement à ladite première tringlerie (18) et à ladite seconde tringlerie (19), ladite première partie de butée (22) et ladite seconde partie de butée (23) étant sélectivement activables par un élément d'actionnement (21) de la tête de pesage pour entraîner ladite première tringlerie (18) et/ou ladite seconde tringlerie (19).

6. Tête de pesage selon la revendication 5, dans laquelle ladite première partie de butée (22) et ladite seconde partie de butée (23) définissent entre elles un volume d'entraînement (VA) qui est adapté pour recevoir au moins partiellement l'élément d'actionnement (21) en insertion de sorte que l'élément d'actionnement (21) est mobile de manière réversible entre au moins une position d'actionnement, dans laquelle il est actif sur ladite première tringlerie (18) et/ou sur ladite seconde tringlerie (19) pour effectuer un mouvement dudit premier volet (15) et/ou dudit second volet (16), et au moins une position de repos, dans laquelle il n'est pas actif sur lesdits moyens d'entraînement (17).

7. Tête de pesage selon la revendication 6, dans laquelle ledit élément d'actionnement (21) est mobile de manière réversible entre une première position d'actionnement, dans laquelle il est actif sur ladite première partie de butée (22) pour effectuer un mouvement dudit premier volet (15), et une seconde position d'actionnement, dans laquelle il est actif sur ladite seconde partie de butée (23) pour effectuer un mouvement dudit second volet (16) ; et dans laquelle ladite position de repos est au moins partiellement interposée entre ladite première position d'actionnement et ladite seconde position d'actionnement.

8. Tête de pesage selon la revendication 7, dans laquelle ledit moyen d'actionnement (20) est configuré pour déplacer ledit élément d'actionnement (21) entre une position relevée, par exemple correspondant à la première position d'actionnement, et une position abaissée, par exemple correspondant à ladite seconde position d'actionnement.

9. Tête de pesage selon une ou plusieurs des revendications 5 à 8, dans laquelle ladite première partie de butée (22) et ladite seconde partie de butée (23) se font face.

10. Tête de pesage selon une ou plusieurs des revendications 5 à 9, dans laquelle lesdits moyens d'entraînement (17) comprennent une première barre d'entraînement (24) et une seconde barre d'entraînement (25) définissant au moins partiellement la première partie de butée (22) et la seconde partie de butée (23), respectivement.

11. Tête de pesage selon la revendication 10, dans laquelle ladite première barre d'entraînement (24) et ladite seconde barre d'entraînement (25) ont des directions d'extension respectives sensiblement parallèles l'une à l'autre ; et/ou dans laquelle ladite première barre d'entraînement (24) et/ou ladite seconde barre d'entraînement (25) et/ou ladite première partie de butée (22) et/ou ladite seconde partie de butée (23) ont des directions d'extension sensiblement horizontales.

12. Tête de pesage selon une ou plusieurs des revendications précédentes, dans laquelle la benne de pesage (12) comprend une paire de volets mobiles conjointement entre une configuration de fermeture commune, dans laquelle ils occluent une ouverture inférieure de ladite benne de pesage (12), et une configuration d'ouverture commune, dans laquelle ils permettent le passage d'au moins un produit depuis ladite ouverture inférieure de ladite benne de pesage (12).

13. Peseuse associative (100) comprenant :
- une pluralité de têtes de pesage, dans laquelle au moins une tête de pesage est une tête de pesage (10) selon une ou plusieurs des revendications précédentes ;
- des moyens d'alimentation (101) pour alimenter au moins un produit adaptés pour alimenter au moins un produit vers au moins une tête de pesage de ladite pluralité de têtes de pesage ;
- au moins un convoyeur (102) adapté pour recevoir le produit provenant d'au moins une tête de pesage et le transporter vers une machine d'emballage.

14. Peseuse associative selon la revendication 13, comprenant un premier convoyeur (103) et un second convoyeur (104) qui sont agencés au moins partiellement en dessous de ladite benne de mémoire (13) pour recevoir au moins un produit provenant de ladite benne de mémoire (13) ; et dans laquelle ledit premier volet (15) et ledit second volet (16) sont sélectivement mobiles entre la configuration de fermeture et la configuration d'ouverture respectives pour relâcher l'au moins un produit dans ledit premier convoyeur (103) et/ou dans ledit second convoyeur (104).
